# EUROPEAN PATENT SPECIFICATION

(11) **EP 3 148 667 B1**
(45) Date of publication and mention of the grant of the patent: **12.06.2019**
(21) Application number: 15717832.8
(22) Date of filing: 01.04.2015
(51) Int. Cl.: B01D 17/04, C10G 33/06, C23C 14/58, C23C 14/16, C23C 22/68

(54) **USE OF A MESH COMPRISING A SURFACE OF HYDRATED ALUMINUM OXIDES FOR OIL-WATER SEPARATION**
VERWENDUNG EINES MESHES MIT EINER OBERFLÄCHE AUS HYDRIERTEN ALUMINIUMOXIDEN ZUR ÖL-WASSER-TRENNUNG
UTILISATION D'UN TREILLIS COMPRENANT UNE SURFACE D'OXYDES D'ALUMINIUM HYDRATÉS POUR LA SÉPARATION HUILE-EAU

(30) Priority: 28.05.2014 EP 14170291
(43) Date of publication of application: 05.04.2017
(73) Proprietor: BASF SE, 67056 Ludwigshafen am Rhein (DE)
(72) Inventor: FLEISCHHAKER, Friederike, 67065 Ludwigshafen (DE)
(74) Representative: BASF IP Association
(86) International application number: PCT/EP2015/057172
(87) International publication number: WO 2015/180872

(56) References cited:
- CN-A- 102 600 735
- US-A1- 2012 020 839
- ZHONGXIN XUE ET AL: "A Novel Superhydrophilic and Underwater Superoleophobic Hydrogel-Coated Mesh for Oil/Water Separation", ADVANCED MATERIALS, vol. 23, no. 37, 4 October 2011 (2011-10-04), pages 4270-4273, XP055198101, ISSN: 0935-9648, DOI: 10.1002/adma.201102616 cited in the application

## Description

The present invention relates to meshes for oil-water separation comprising a surface comprising hydrated aluminium oxides, in particular γ-AlOOH thereby providing hydrophilic properties to the surface of the mesh. The invention furthermore relates to a process for manufacturing such mesh by coating an uncoated mesh with aluminum or aluminum oxide and converting such coating to hydrated aluminum oxide. Furthermore, the invention relates to the use of such mesh for oil-water separation.

Oil-water separation is a worldwide challenge. Typical separation problems comprise the separation emulsions of crude oil and (formation) water, the separation of industrial oily waste water or separation in connection with the removal of oil spills.

It is known in the art to separate oil-water emulsions or other oil-water mixtures by the addition of chemical additives such as demulsifiers and/or deoilers. Examples of such demulsifiers are disclosed for instance in EP-A 0 264 841, EP-A 0 499 068 or EP-A 0 267 517.

It is furthermore known to use materials which are capable of selectively absorbing organic solvents, including but not limited to oils. Examples comprise open-cell foams based on a melamine-formaldehyde modified with a hydrophobic coating such as disclosed in WO 2007/110361 A1 or WO 2008/107439 A1. J. K. Yuan, X. G. Liu, O. Akbulut, J. Q. Hu, S. L. Suib, J. Kong, F. Stellacci, Nat. Nanotechnol. 2008, 3, 332 disclose superwetting nanowire membranes for selective absorption. Such membranes are obtained by coating nanowire membranes with silicones.

It has also been suggested to use meshes for separation of oil and water.

L. Feng, Z. Y. Zhang, Z. H. Mai, Y. M. Ma, B. Q. Liu, L. Jiang, D. B. Zhu, Angew. Chem. 2004, 116, 2046; Angew. Chem. Int. Ed. 2004, 43, 2012 disclose a super-hydrophobic and super-oleophilic coating mesh film for the separation of oil and water. The coating is peformed by using a homogeneous emulsion comprising 50 % by wt. of water, 30 % by wt. of polytetrafluoroethylene (teflon), 10 % by wt. of polyvinylacetate as adhesive , 8 % by wt. of polyvinylalcohol as dispersant 2% dodecylbenzenesulfonate as surfactant. As shown in the cited document drops of water remain on the mesh and do not pass it while drops of diesel oil flow through the mesh.

However, the described hydrophobic/oleophilic oil-removing materials are easily fouled or clogged by oils. Thus the separation efficiency is drastically reduced after a limited number of uses. Additionally, adhered oils are hard to remove which results in secondary pollution during this cleaning process as well as in a waste of both oil and oleophilic material.

Z. Xue, S. Wang, L. Lin, L. Chen. M. Liu, L. Feng and L. Jiang, Adv. Mater. 2011, 23, 4270-4273 report about the manufacture of a superhydrophilic and underwater superoleophobic hydrogel-coated steel mesh for oil-water separation. The steel mesh was coated with a radiation curable, aqueous composition of acryl amide, N,N'- methylene bis acrylamide as crosslinker, a photoinitiator and high molecular polyacrylamide (Mₙ = 3,000,000 g/mol) as adhesive agent and the coated mesh was cured with UV-light. The netting described has the opposite separation characteristics than the netting described by L. Feng et al. A drop of water can pass through the netting while oil remains on the netting. Such materials have the advantage that they are easy to clean, the equipment is reusable, the oil-phase can be processed after separation and the equipment is protected from oil-fouling. However, the polyacrylamide coating described by *Xue et al*. suffers from a lack of efficiency and stability with respect to the separation of crude oil - water emulsions. Our tests showed that a mesh coated in the manner described separated hexane-water mixtures but did not separate sufficiently crude oil - water emulsions.

W. Zhang, Z. Shi, F. Zhang, X. Liu, J. Jin, and L. Jiang, Adv. Mater. 25, 2071 -2076 disclose superhydrophobic and superoleophilic PVDF membranes for effective separation of water-in-oil emulsions with high flux. For the water-in-oil emulsions tested petroleum ether, toluene, isooctane and dichloromethane were used as oil phase. Emulsions of crude oil and water were not tested.

P. Kim, M. J. Kreder, J. Alvarenga and J. Aizenberg, Nano Lett., 2013, 13 (4), pp 1793-1799, disclose the use of γ-AlOOH (Boehmite) with infiltrated perfluorated solvents to achieve an omniphobic surface. The publication does not disclose coating meshs and their use for oil-water separation. CN-A-102 600 735 discloses an oil-water separation mesh with a hydrophilic molecular sieve coating.

It was the objective of the present invention to use coated meshes being hydrophilic and oleophobic which show good results in the separation of crude oil - water emulsions.

Correspondingly, the present invention relates to use of a coated for oil-water separation the mesh comprising a surface comprising hydrated aluminumoxide, preferably γ-AlOOH.

The application discloses a method of manufacturing such mesh wherein the method at least comprises the following steps:
(1) Coating a mesh with aluminum or aluminum oxide, and
(2) converting the aluminum or aluminum oxide coating into hydrated aluminum oxides by treating the coating with water or water vapor at a temperature above room temperature.

The application also discloses a process for manufacturing such mesh, wherein a mesh made of aluminum is used as starting material followed by converting the surface of the mesh into hydrated aluminum oxides by treating the mesh with water and increasing the temperature to more than room temperature.

List of figures:

| | |
|---|---|
| Figure 1 | Schematic representation of the testing device for the meshes |
| Figure 2 | Schematic representation of an oil-water separator equipped with meshes |

With regard to the invention, the following should be stated specifically:
The mesh to be used for oil-water separation according to this invention comprises a surface comprising hydrated aluminumoxide. "Hydrated aluminium oxides" include aluminiumoxyhydroxides, such as α-AlOOH or γ-AlOOH having a defined crystalline structure but also aluminumoxyhydroxides having a less defined structure, i.e. products being amorphous or having at least amorphous portions. "Hydrated aluminum oxides" may comprise besides aluminium ions also other metal ions such as for instance ferric ions being understood that usually at least 90 mol % of the metal ions present are aluminum ions.

Preferably, the surface of the mesh comprises γ-AlOOH which is also known as Boehmite.

The thickness of layer of hydrated aluminum oxides on the surface of the mesh typically may be 50 nm to 500 nm, preferably 100 nm to 200 nm.

The mesh used according to the invention may be made by converting the surface of an aluminum mesh to a surface comprising hydrated aluminum oxides or by coating a mesh of another material, for instance a mesh of stainless steel with aluminum or aluminum compounds such as aluminum oxides and converting the coating to hydrated aluminum oxides.

### Mesh used for coating:

For manufacturing the coated mesh an uncoated mesh is used as starting material. Any suitable material for the mesh may be selected. Examples include meshes made of metals such as steel, stainless steel, bronze, brass, or aluminum or meshes made of polymeric materials such as polyethylene, polypropylene, polyacrylamide, or polyethersulfone. In one embodiment of the invention metals, preferably stainless steel is selected as material for the mesh.

The mesh may comprise wires or fibers which are arranged as a net but of course also other types of mesh may be used such as sheets with openings, e.g. openings stamped into the sheet. The latter method has the advantage that also openings having irregular shape may be used which may be difficult when using wires.

If the mesh comprises fibers and/or wires, such the fibers/wires of the net may have a thickness of 0.02 to 0.2 mm, for instance 0.03 mm to 0.1 mm.

The mesh and the geometry of the openings in the mesh used may be chosen by the skilled artisan according to his/her needs, for example in a tetragonal, hexagonal or octagonal manner or a combination of two or more than two geometries. Examples of tetragonal openings include squares, rectangles or parallelograms. Other shapes include circles, ovals, star-like openings or openings of irregular shape.

The mesh size may be chosen by the skilled artisan according to his/her needs. In particular, the mesh size may be from 10 µm to 100 µm, for example 50 µm to 70 µm. Said number relates to the longest straight distance from one point along the border of the opening to another point along the border of the same opening. Bye the way of example it may be the diagonal in a square, the long diagonal in a rectangle or the diameter of a circle. Should the mesh comprise different openings, the number relates to the arithmetic average.

### Surface modification

By modifying the surface of an unmodified mesh a surface-modified mesh comprising a surface comprising hydrated aluminumoxide, preferably γ-AlOOH is obtained. The modified surface provides hydrophilic, preferably superhydrophilic properties to the mesh thereby rendering it suitable for oil-water separation. The term "superhydrophilic" means that the contact angle for an oil is > 150° while the contact angle for water is < 5°. In a first method a mesh as described above is coated with aluminum or aluminum oxide. Any technology for coating may be used. Examples of suitable coating technologies include physical vapor deposition methods such as thermal evaporation, sputtering, electron beam evaporation techniques, or CVD technologies. Such techniques are known to the skilled artisan and are for example disclosed in Mahan, John E. "Physical Vapor Deposition of Thin Films" New York: John Wiley & Sons, 2000; Dobkin and Zuraw (2003) "Principles of Chemical Vapor Deposition"; or or Kluwer, Smith, Donald (1995) "Thin-Film Deposition: Principles and Practice" McGraw-Hill.

The thickness of the layer of aluminum or aluminum oxide is selected by the skilled artisan according to his/her needs and usually is from 50 nm to 500 nm, preferably 100 nm to 200 nm.

Layers of aluminum /aluminum oxide may also coated onto the mesh by sol-gel methods followed by thermal treatment. Also such techniques are known to the skilled artisan and are for example disclosed in C. Jeffrey Brinker, George W. Scherer (Hrsg.) "Sol Gel Science. The Physics and Chemistry of Sol-Gel Processing. The Physics and Chemistry of Sol-gel Processing", Academic Press, Boston (1990) or Kim, Philseok; Kreder, Michael J.; Alvarenga, Jack; et al. NANO LETTERS Volume: 13 Issue: 4 Pages: 1793-1799 Published: APR 2013.

Optionally, the uncoated mesh may be precoated with an adhesion layer. Such an adhesion layer may be a layer of Cr or Ti which also may be applied by using by physical vapor deposition methods but also layers of other oxides may be possible. The thickness of such an additional coating may be from 1 to 20 nm, for example 3 to 10 nm.

The material of the uncoated mesh to be modified according to this technology may be any material. Preferably, the material of the uncoated mesh is selected from steel, stainless, steel, bronze or brass, in particular stainless steel. The mesh size may be chosen by the skilled artisan according to his/her needs. In particular, the mesh size may be from 10 µm to 100 µm, for example 40 µm to 60 µm. Further details of the unmodified meshs to be used have been described above and we explicitly refer to the description.

In an additional step following the coating with aluminum or aluminum oxides the coating is converted into hydrated aluminum oxides, preferably γ-AlOOH, by treating the coating with water, preferably deionized water, or water vapor at a temperature above room temperature, preferably more than 50°C and more preferably more than 95°C. In one embodiment the coated mesh may be put into boiling water. The duration of the treatment with water is selected by the skilled artisan according to his/her needs and may be from 10 to 40 min, preferably 15 to 30 min.

The thickness of the layer of hydrated aluminum oxides on the surface of the mesh usually is from 50 nm to 1µm, preferably 100nm to 500 nm.

In a second method an aluminum mesh is used as starting material.

The mesh size may be chosen by the skilled artisan according to his/her needs. In particular, the mesh size may be from 10 µm to 100 µm, for example 40 µm to 60 µm. Further details of unmodified meshes to be used have been described above and we explicitly refer to the description. The surface of the mesh is converted into hydrated aluminum oxides, preferably γ-AlOOH by treating the mesh with water at a temperature above room temperature, preferably more than 50°C. In one embodiment the aluminum mesh may be put into boiling water for about 10 to 40 min, preferably 15 to 30 min.

### Use of the surface modified meshes for separating oil-water separation

The term "oil" as used herein encompasses any kind of organic liquids which form emulsions with water. Examples of oils include hydrocarbons, such as aliphatic and/or aromatic hydrocarbons, in particular hydrocarbons having a boiling point of more than 150°C, crude oil, mineral oils such as diesel oil, gasoline, heavy fuel oil, engine oil, vegetable oils such as coconut oil, tall oil or rape oil, or synthetic oils such as silicone oils. In one preferred embodiment? the oil is crude oil. The term water-oil mixtures shall include any kind of mixtures of oil and water comprising an oil phase and a water phase, including but not limited to oil-water emulsions or water-oil emulsions, in particular emulsions of crude oil and water such as formation water.

Examples of specific water-oil separation processes include separation processes in course of oil production and oil refining, such as the separation of emulsions of crude oil and water produced from an oil bearing formations, the separation of heavy oil emulsions from oil sands tailings or heavy oil emulsions obtained from SAGD techniques, de-oiling of water, oil sludge dewatering or the removal of hydrocarbons from drilling fluids. Further examples comprise the separation of oil-water mixtures from tank bottoms at refineries or other storage facilities, collections points for disposable waste oils, waste from chemical factories, ballast water or the removal of oil spills.

In one preferred embodiment of the invention, the oil-water mixture to be separated is a mixture of crude oil and water, in particular an emulsion of crude oil and water.

In order to separate oil-water mixtures according to this invention the oil-water mixture may be pressed against a mesh. The force applied may simply be gravity forces but of course also pressure may be applied. Due to the (super)hydrophilic surface properties of the coated mesh, water may pass through the mesh while the passage of oil through the mesh is impeded so that at least part of the oil is retained on the mesh and may be removed from the mesh.

In one embodiment of the invention for the separation of oil-water mixtures a separating device is used which a least comprises: a first chamber at least comprising an inlet for fluids and an outlet for fluids, wherein the first chamber is connected with a second chamber at least comprising an outlet for fluids and wherein furthermore a coated mesh according to this invention separates the first chamber from the second chamber. In a preferred embodiment the device is a device for cross-flow filtration.

For separating oil-water mixtures using the device described, the oil-water mixture to be separated is allowed to flow into the first chamber. A suitable pressure selected by the skilled artisan may be applied. Water or at least part of the water of the oil-water mixture passes through the mesh into the second chamber and may be recovered from the second chamber from the outlet of the second chamber. Oil or an oil-water mixture with decreased water content may be recovered from the outlet of the first chamber. The process may be continuous or discontinuous. In a preferred embodiment the process is a continuous cross-flow filtration.

If one separating step is not sufficient to separate oil and water completely the separation step may be repeated using the same or another device. For example for separating a cascade of two or more of the devices described successively assembled may be used.

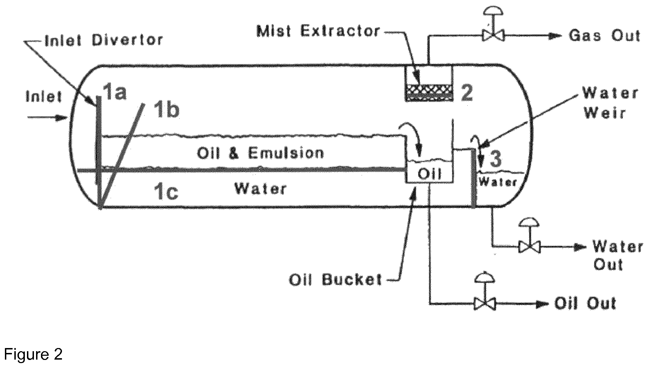

In one further embodiment a separator for the separation of crude oil and water may be used which is equipped with meshes according to the present invention. A schematic representation of such a separator is shown in figure 2. The separator is a cylinder shaped hollow body which at least comprises an inlet for an oil-water emulsion, an oil bucket for separated oil, outlets for separated water and separated oil and furthermore a mist extractor and an outlet for separated gas. Meshes may be incorporated vertically (1a) or almost vertically (1b) into the separator at a location close to the inlet for the oil-water emulsion. A mesh may also be incorporated horizontally. In such embodiment, the inlet for the oil-water emulsion is located above the mesh so that the emulsion may be separated into oil and water under the influence of gravity. In order to hold back oil spills a mesh may furthermore be used as water weir (3) and/or in the mist extractor (2). Of course the skilled artisan may use meshes in an oil-water separator in another manner.

### Advantages of the present invention

Using the surface modified mesh according to the present invention has the advantage that it is not necessary to use demulsifiers for oil-water separation or it is at least possible to reduce the amount of demulsifiers and/or deoilers used. Without wishing to be bound by theory, it seems to be so that hydrated aluminum oxides, in particular Boehmite incorporates water and forms a hydrophilic water slip film on the surface in a wet state.The inorganic surface coating furthermore has the advantage that they are mechanically more stable than organic coatings of a mesh.

The invention is illustrated in detail by the examples which follow.

### Manufacture of coated meshs

### Example 1:

A stainless steel metal grid 1.4401 with square cells having a mesh size of 50 µm and a diameter of the wire of 0,036 mm was used. Pieces with a size 5 cm x 5 cm were cut. The metal grid pieces were cleaned with acetone, deionized water and again acetone and dried with air.

The cleaned metal grid pieces were coated with 5 nm Cr (as adhesion layer) and 100 nm Al by thermal evaporation according to processes well known to the skilled artisan. Details are disclosed in K.S. Sree Harsha, "Principles of Vapor Deposition of Thin Films", Elsevier, 2006; R.Glang "Vacuum Evaporation", Handbook of Thin Film Technology, McGraw-Hill, NY, p 1-130, 1970, I.A. Blech "Step Coverage by Vapor Deposited Thin Aluminum Films", Solid StateTechnology, p123, 1983

In a following step the Al layer was converted into aluminum oxyhydroxide by putting the coated grids into boiling deionized water for 30 min.

### Comparative example 1:

A stainless steel metal grid 1.4401 with square cells having a mesh size of 50 µm and a diameter of the wire of 0,036 mm was used. Pieces with a size of 5 cm x 5 cm were cut. The metal grid pieces were cleaned with acetone, deionized water and again acetone and dried with air. In the next step, the cleaned metal grid piece was clamped on top of a 100 mL Schott glass bottle (GL 45 thread). The glass bottle with the metal grid on top were put upside down into the the coating solution disclosed below, thereafter removed and cured under UV-light (365 nm).

For coating, the hydrogel precursor solution described in Adv. Mater. 2011, 23, 4270 was used: 50 g acrylamide, 1.5 g N,N'-methyl-bis acrylamid (crosslinking agent), 1.0 g 2,2'-diethoxyacetophenon (photoinitiator) and 0.5 g polyacrylamide, having an M_{w} of 2,000,000 g/mole (adhesive agent) were dissolved in 47 g deionized water and stirred for 45 min. To achieve best solubilities, PAM is dissolved as the first ingredient.

### Oil-water separation test

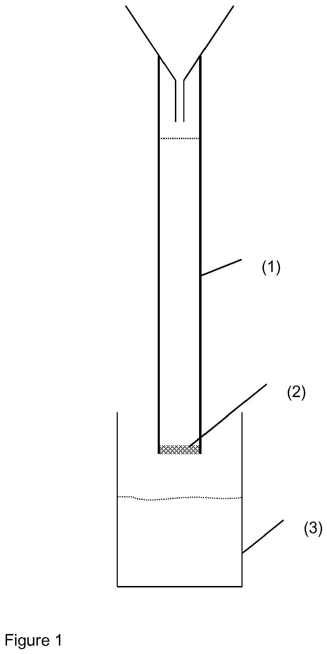

The coated grids were used for oil-water separation. The test apparatus is schematically shown in Figure 1. A sample of the mesh (2) is fixed at the bottom opening of a vertical glass pipe (3) (length: 60 cm, diameter: 1,5 cm. Then 150 ml of the oil water mixture to be tested is poured into the glass pipe using a funnel and any solvent passing the mesh is collected using a beaker. The volume of organic phase that is not held back by the grid, i.e. collected in the beaker is measured. For each test mixture a fresh grid is used. Each test with a specific oil/water mixture and a specific grid was repeated three times with a freshly prepared grid. All tests were performed at room temperature.

The following oil-water test mixtures were used:
Hexane/Water 30 / 70 vol%
Toluene/Water 30 / 70 vol%
Hexane/Toluene/Water 24 / 6/ 70 vol%
Cooking (Thistle) oil / Water, 30 / 70 vol%
Heavy gasoline / Water, 30 / 70 vol%
Crude oil (oilfield in Northern Germany) / Water, 30 / 70 vol%

The water phase is colored blue for better visibility with methylene blue. Also emulsions of the mixtures were tested. They were prepared by vigorously shaking the corresponding 2-phase mixtures.

The percentage of oil phase (vol % relating to the total amount of oil used for the test) that is not held back by the grid and passes through the grid is listed in table 1. Since at least three reproduction experiments were performed per grid and per oil / water mixture a range is -if necessary- provided.

**Table 1: Percentage (vol%) of the oil phase of the tested oil/water mixtures that passes the corresponding grid. Blank boxes: no measurements were performed**

| **No.** | **Coating** | **Hexane / water (30/70)** | **Toluene /water (30/70)** | **Hexane / Toluene / water (24/6/79)** | **Thistle oil / water (30/70)** | **Thistle oil / water (30/70) emulsified** | **Gasoline / water (30/70)** | **Crude oil / water (30/70)** |
|---|---|---|---|---|---|---|---|---|
| C1 | coating of crosslinked acrylamide | 0% | 100 % | 5 to 20 % | 100 % | 100 % | 100 % | 100 % |
| 1 | AlOOH coating | 0% | | | | | 30 to 50 % | 50 to 75 % |

### Discussion

The separation efficiencies of the differently coated grids (see experimental part) for several oil-water mixtures and corresponding emulsions (see experimental part) were determined. Within this series of different oil-water mixtures, the mixture hexane-water is regarded as the one to be separated easiest while for the gasoline-water and especially crude oil - water mixtures separation is known to be much more challenging.

Comparative example C1 with a coating according to the state-of-the art performs best with a hexane-water mixture and there also is some separation efficiency with a hexane-toluene-water mixture. However, for crude oil - water mixtures, gasoline - water mixtures, thistle oil - water mixtures, and toluene - water mixtures no separation was possible.

The mesh coated according to the present invention with an AIOOH coating shows a significantly improved separation of oil and water for mixtures of gasoline and water and of crude oil and water.

## Claims

1. Use of a coated mesh for oil-water separation wherein the mesh comprises a surface comprising hydrated aluminum oxide.

2. Use according to claim 1, wherein the surface comprises γ-AlOOH.

3. Use according to claim 1 or claim 2, wherein the mesh has a mesh size of 10 µm to 100 µm.

4. Use according to claim 1, wherein the mesh is manufactured by a method which comprises at least the following steps:
(1) Coating a mesh with aluminum or aluminum oxide, and
(2) Converting the aluminum or aluminum oxide coating into hydrated aluminum oxides by treating the coating with water or water vapor at a temperature above room temperature.

5. Use according to claim 4, wherein the hydrated aluminum oxide is γ-AlOOH.

6. Use according to claims 4 or 5, wherein the mesh has a mesh size of 10 µm to 100 µm.

7. Use according to any of claims 4 to 6, wherein the unmodified mesh is made of a metal selected from the group of steel, stainless steel, bronze, and brass.

8. Use according to any of claims 4 to 6, wherein the unmodified mesh is made of stainless steel.

9. Use according to any of claims 4 to 6, wherein the thickness of the aluminum or aluminum oxide layer is from 50 nm to 150 nm.

10. Use according to any of claims 4 to 9, wherein step (2) is performed at a temperature of more than 95°C.

11. Use according to any of claims 4 to 10, wherein aluminum or aluminum oxide is coated by physical or chemical vapor deposition.

12. Use according to any of claims 4 to 10, wherein aluminum oxide is coated by sol-gel technology followed by thermal treatment.

13. Use according to any of claims 4 to 12, wherein the process includes an additional precoating step (0) in which the mesh is precoated with Cr and/or Ti.

14. Use according to claim 1, wherein the mesh is manufactured by a method in which a mesh made of aluminum is used as starting material followed by converting the surface of the mesh into hydrated aluminum oxides by treating the mesh with water or water vapor at a temperature above room temperature.

15. Use according to claim 14, wherein the treatment is performed with water having a temperature of more than 95°C.

16. Use according to any of claims 1 to 15, wherein an oil-water mixture is pressed against the mesh thereby allowing water to pass through the mesh while at least part of the oil remains on the mesh.

17. Use according to any of claims 1 to 15, wherein a separating device is used which a least comprises
• a first chamber at least comprising an inlet for fluids and an outlet for fluids,
• a second chamber connected with the first chamber at least comprising an outlet for fluids and
• a coated mesh which separates the first chamber from the second chamber,
wherein the oil-water mixture to be separated is allowed to flow into the first chamber through the inlet applying a suitable pressure, thereby allowing water to pass through the mesh from the first chamber into the second chamber while at least part of the oil remains in the first chamber and removing water through the outlet from the second chamber and oil or an oil-water mixture with decreased water content form the first chamber.

18. Use according to claim 17, wherein the separation is a continuous cross-flow filtration.

19. Use according to any of claims 1 to 18, wherein the oil is selected from the groups of hydrocarbons, crude oil, mineral oils, diesel oil, gasoline, heavy fuel oil, engine oil, vegetable oils, coconut oil, tall oil or rape oil, or silicone oils.

20. Use according to any of claims 1 to 18, wherein the oil is crude oil.

21. Use according to any of claims 1 to 18, wherein the separation is selected from the separation of emulsions of crude oil and water produced from an oil bearing formations, the separation of heavy oil emulsions from oil sands tailings or heavy oil emulsions obtained from SAGD techniques, de-oiling of water, oil sludge dewatering, removal of hydrocarbons from drilling fluids, the separation of oil-water mixtures from tank bottoms at refineries or other storage facilities, collections points for disposable waste oils, waste from chemical factories, ballast water or the removal of oil spills.

## Patentansprüche

1. Verwendung eines beschichteten Siebs zur Öl-WasserTrennung, wobei das Sieb eine Oberfläche umfasst, die hydratisiertes Aluminiumoxid umfasst.

2. Verwendung gemäß Anspruch 1, wobei die Oberfläche γ-AlOOH umfasst.

3. Verwendung gemäß Anspruch 1 oder Anspruch 2, wobei das Sieb eine Maschenweite von 10 µm bis 100 µm aufweist.

4. Verwendung gemäß Anspruch 1, wobei das Sieb durch ein Verfahren hergestellt ist, das wenigstens die folgenden Schritte umfasst:
(1) Beschichten eines Siebes mit Aluminium oder Aluminiumoxid und
(2) Umwandeln der Aluminium- oder Aluminiumoxidbeschichtung in hydratisierte Aluminiumoxide durch Behandeln der Beschichtung mit Wasser oder Wasserdampf bei einer Temperatur von höher als Raumtemperatur.

5. Verwendung gemäß Anspruch 4, wobei das hydratisierte Aluminiumoxid γ-AlOOH ist.

6. Verwendung gemäß Ansprüchen 4 oder 5, wobei das Sieb eine Maschenweite von 10 µm bis 100 µm aufweist.

7. Verwendung gemäß einem der Ansprüche 4 bis 6, wobei das unmodifizierte Sieb aus einem Metall ausgewählt aus der Gruppe von Stahl, rostfreiem Stahl, Bronze und Messing besteht.

8. Verwendung gemäß einem der Ansprüche 4 bis 6, wobei das unmodifizierte Sieb aus rostfreiem Stahl besteht.

9. Verwendung gemäß einem der Ansprüche 4 bis 6, wobei die Dicke der Aluminium- oder Aluminiumoxidschicht von 50 nm bis 150 nm beträgt.

10. Verwendung gemäß einem der Ansprüche 4 bis 9, wobei Schritt (2) bei einer Temperatur von höher als 95 °C durchgeführt wird.

11. Verwendung gemäß einem der Ansprüche 4 bis 10, wobei Aluminium oder Aluminiumoxid durch physikalische oder chemische Dampfabscheidung aufgeschichtet ist.

12. Verwendung gemäß einem der Ansprüche 4 bis 10, wobei Aluminiumoxid durch Sol-Gel-Verfahren, gefolgt von Wärmebehandlung, aufgeschichtet ist.

13. Verwendung gemäß einem der Ansprüche 4 bis 12, wobei das Verfahren einen zusätzlichen Vorbehandlungsschritt (0) umfasst, bei dem das Sieb mit Cr und/oder Ti vorbeschichtet wird.

14. Verwendung gemäß Anspruch 1, wobei das Sieb durch ein Verfahren durch ein Verfahren hergestellt ist, bei dem ein Sieb aus Aluminium als Ausgangsmaterial verwendet wird, gefolgt von Umwandeln der Oberfläche des Siebs in hydratisierte Aluminiumoxide durch Behandeln des Siebs mit Wasser oder Wasserdampf bei einer Temperatur von höher als Raumtemperatur.

15. Verwendung gemäß Anspruch 14, wobei die Behandlung mit Wasser mit einer Temperatur von höher als 95 °C durchgeführt wird.

16. Verwendung gemäß einem der Ansprüche 1 bis 15, wobei ein Öl-Wasser-Gemisch gegen das Sieb gedrückt wird, um zu erlauben, dass Wasser durch das Sieb tritt, während wenigstens ein Teil des Öls an dem Sieb zurückbleibt.

17. Verwendung gemäß einem der Ansprüche 1 bis 15, wobei eine Trennvorrichtung verwendet wird, die wenigstens umfasst:
• eine erste Kammer, die wenigstens einen Einlass für Fluide und einen Auslass für Fluide umfasst,
• eine zweite Kammer, die mit der ersten Kammer verbunden ist und wenigstens einen Auslass für Fluide umfasst, und
• ein beschichtetes Sieb, das die erste Kammer von der zweiten Kammer trennt,
wobei das Öl-Wasser-Gemisch, das getrennt werden soll, durch den Einlass in die erste Kammer fließen gelassen wird, wobei ein geeigneter Druck angewendet wird, um zu erlauben, dass Wasser durch das Sieb aus der ersten Kammer in die zweite Kammer tritt, während wenigstens ein Teil des Öls in der ersten Kammer zurückbleibt, und Entfernen von Wasser durch den Auslass aus der zweiten Kammer und von Öl oder Öl-Wasser-Gemisch mit verringertem Wassergehalt aus der ersten Kammer.

18. Verwendung gemäß Anspruch 17, wobei die Trennung eine kontinuierliche Cross-Flow-Filtration ist.

19. Verwendung gemäß einem der Ansprüche 1 bis 18, wobei das Öl ausgewählt ist aus den Gruppen von Kohlenwasserstoffen, Rohöl, Mineralölen, Dieselöl, Benzin, schwerem Heizöl, Motoröl, Pflanzenölen, Kokosnussöl, Tallöl oder Rapsöl und Siliconölen.

20. Verwendung gemäß einem der Ansprüche 1 bis 18, wobei das Öl Rohöl ist.

21. Verwendung gemäß einem der Ansprüche 1 bis 18, wobei die Trennung ausgewählt ist aus der Trennung von Emulsionen von Rohöl und Wasser, erzeugt aus einer Öllagerstätte, der Trennung von Schwerölemulsionen aus Ölsandteichen oder durch SAGD-Verfahren erhaltenen Schwerölemulsionen, Entölung von Wasser, Ölschlammentwässerung, der Entfernung von Kohlenwasserstoffen aus Bohrfluiden, der Trennung von Öl-Wasser-Gemischen aus Tankböden in Raffinerien oder anderen Lageranlagen, Sammelstellen für Abfallöle, Abfall aus chemischen Fabriken, Ballastwasser und der Entfernung von Ölverschmutzungen.

## Revendications

1. Utilisation d'un maillage enduit pour la séparation huile-eau dans laquelle le maillage comprend une surface comprenant un oxyde d'aluminium hydraté.

2. Utilisation selon la revendication 1, dans laquelle la surface comprend γ-AlOOH.

3. Utilisation selon la revendication 1 ou la revendication 2, dans laquelle le maillage a une taille de maille de 10 µm à 100 µm.

4. Utilisation selon la revendication 1, dans laquelle le maillage est fabriqué par un procédé qui comprend au moins les étapes suivantes :
(1) revêtir un maillage d'aluminium ou d'oxyde d'aluminium, et
(2) convertir le revêtement d'aluminium ou d'oxyde d'aluminium en oxydes d'aluminium hydratés en traitant le revêtement avec de l'eau ou de la vapeur d'eau à une température supérieure à la température ambiante.

5. Utilisation selon la revendication 4, dans laquelle l'oxyde d'aluminium hydraté est γ-AlOOH.

6. Utilisation selon les revendications 4 ou 5, dans laquelle le maillage a une taille de maille de 10 µm à 100 µm.

7. Utilisation selon l'une quelconque des revendications 4 à 6, dans laquelle le maillage non modifié se compose d'un métal sélectionné dans le groupe constitué de l'acier, de l'acier inoxydable, du bronze et du laiton.

8. Utilisation selon l'une quelconque des revendications 4 à 6, dans laquelle le maillage non modifié se compose d'acier inoxydable.

9. Utilisation selon l'une quelconque des revendications 4 à 6, dans laquelle l'épaisseur de la couche d'aluminium ou d'oxyde d'aluminium est de 50 nm à 150 nm.

10. Utilisation selon l'une quelconque des revendications 4 à 9, dans laquelle l'étape (2) est exécutée à une température supérieure à 95 °C.

11. Utilisation selon l'une quelconque des revendications 4 à 10, dans laquelle l'aluminium ou l'oxyde d'aluminium est déposé pour former un revêtement par dépôt physique ou chimique en phase vapeur.

12. Utilisation selon l'une quelconque des revendications 4 à 10, dans laquelle l'oxyde d'aluminium est déposé pour former un revêtement par la technologie sol-gel suivie d'un traitement thermique.

13. Utilisation selon l'une quelconque des revendications 4 à 12, dans laquelle le procédé comprend une étape additionnelle de prérevêtement (0) dans laquelle le maillage est prérevêtu de Cr et/ou de Ti.

14. Utilisation selon la revendication 1, dans laquelle le maillage est fabriqué par un procédé dans lequel un maillage en aluminium est utilisé comme matériau de départ, avec ensuite une conversion de la surface du maillage en oxydes d'aluminium hydratés en traitant le maillage avec de l'eau ou de la vapeur d'eau à une température supérieure à la température ambiante.

15. Utilisation selon la revendication 14, dans laquelle le traitement est réalisé avec de l'eau ayant une température supérieure à 95 °C.

16. Utilisation selon l'une quelconque des revendications 1 à 15, dans laquelle un mélange huile-eau est pressé contre le maillage en permettant ainsi à l'eau de traverser le maillage tandis qu'au moins une partie de l'huile reste sur le maillage.

17. Utilisation selon l'une quelconque des revendications 1 à 15, dans laquelle un dispositif de séparation est utilisé, lequel comprend au moins :
• une première chambre comprenant au moins une entrée pour les fluides et une sortie pour les fluides,
• une deuxième chambre reliée à la première chambre comprenant au moins une sortie pour les fluides, et
• un maillage enduit qui sépare la première chambre de la deuxième chambre,
dans laquelle on laisse le mélange huile-eau à séparer s'écouler en pénétrant dans la première chambre par l'entrée en appliquant une pression appropriée, en permettant ainsi à l'eau de traverser le maillage en passant de la première chambre à la deuxième chambre tandis qu'au moins une partie de l'huile reste dans la première chambre, et en retirant l'eau par la sortie de la deuxième chambre, et de l'huile ou un mélange huile-eau ayant une teneur en eau réduite à partir de la première chambre.

18. Utilisation selon la revendication 17, dans laquelle la séparation est une filtration continue à écoulement tangentiel.

19. Utilisation selon l'une quelconque des revendications 1 à 18, dans laquelle l'huile est sélectionnée dans les groupes constitués d'hydrocarbures, de pétrole brut, d'huiles minérales, de carburant diesel, d'essence, de mazout lourd, d'huile moteur, d'huiles végétales, d'huile de noix de coco, de tallol ou d'huile de colza, ou d'huiles de silicone.

20. Utilisation selon l'une quelconque des revendications 1 à 18, dans laquelle l'huile est du pétrole brut.

21. Utilisation selon l'une quelconque des revendications 1 à 18, dans laquelle la séparation est sélectionnée parmi la séparation d'émulsions de pétrole brut et d'eau produites à partir de formations pétrolifères, la séparation d'émulsions d'huile lourde de résidus de sables pétrolifères ou d'émulsions d'huile lourde obtenues par des techniques de drainage par gravité au moyen de vapeur (DGMV), le déshuilage d'eau, la déshydratation de boues d'hydrocarbures, l'enlèvement d'hydrocarbures de fluides de forage, la séparation de mélanges huile-eau de fonds de cuves dans des raffineries ou d'autres installations de stockage, des points de collecte d'huiles usagées jetables, de déchets d'usines chimiques, d'eau de ballast, ou l'enlèvement de déversements d'hydrocarbures.
